Europäisches Patentamt

European Patent Office

Office européen des brevets

(11) Publication number: 0 218 967
A1

# EUROPEAN PATENT APPLICATION

(21) Application number: 86113224.9

(22) Date of filing: 25.09.86

(51) Int. Cl.4: **A23L 1/20** , A23L 1/105 , C12N 1/14

(30) Priority: 07.10.85 JP 224250/85

(43) Date of publication of application:
22.04.87 Bulletin 87/17

(84) Designated Contracting States:
CH DE FR GB LI SE

(71) Applicant: BELL SHOKUHIN KABUSHIKI KAISHA
3-35, Nijuyonkensanjo-7-chome Nishi-ku Sapporo-shi(JP)

(72) Inventor: Fukuyama, Tatsuhiko
2-33, Nishi-14-chome Minami-16-jo
Chuo-ku Sapporo-shi(JP)
Inventor: Sago, Tsutomu
681-27, Nishi-9-chome Minami-18-jo
Chuo-ku Sapporo-shi(JP)

(74) Representative: Werner, Hans-Karsten, Dr. et al
Deichmannhaus am Hauptbahnhof
D-5000 Köln 1(DE)

(54) Edible soybean koji having no off-flavor and process for producing the same.

(57) The present invention relates to a non-viscous edible Soybean Koji having no off-flavor of which the surface is covered with Koji (Aspergillus) and cellulose and/or starch are coated therewith. This Soybean Koji per se may utilized as a food product and additionally as a food material.

EP 0 218 967 A1

# EDIBLE SOYBEAN KOJI HAVING NO OFF-FLAVOR AND PROCESS FOR PRODUCING THE SAME

## BACKGROUND OF THE INVENTION:

This invention relates to a non-viscous, edible soybean Koji having no off-flavor covered on the soybean surface with Aspergillus hyphae and having a delicate taste, and to a process for producing the same.

The edible soybean Koji according to the present invention is intended to provide food products having good digestibility, nutrition-supplementation from plant protein, good flavor and testure by using the edible soybean Koji as it is or after autolysis, grinding, drying, pulverization or the like as materials for various foods.

## DESCRIPTION OF THE PRIOR ART

There have heretofore been processed food products obtained by biochemical techniques, for example, Miso, soy sauce, Tofu and Natto in Japan and tempeh in Southeast Asia. All of them are characteristic proteinaceous foods free from the indigestibility and harmfulness of soybean itself, but are liked only locally and difficult to popularize all over the world.

Kojis used for processing soybeans by a biochemical method include Soy Koji, soybean-bulked Koji for producing soybean Miso and Tamari soy sauce, soybean Koji for "Hama Natto", etc. These conventional techniques comprise inoculating Aspergillus into steamed soybeans. Since large amounts of water and protein contained in the steamed soybeans are not suitable for growth of the Aspergillus, the conventional techniques are mainly composed of a technique for making them suitable. That is to say, in the case of Soy Koji, the total amounts of water and protein are adjusted so as to attain a humidity suitable for growth of the Aspergillus by mixing dried and ground wheat having a low water content with steamed soybeans. In the case of Hama Natto, the water content of the surface of steamed soybeans is adjusted by mixing therewith dried and heated wheat flour or raw wheat flour. In the case of soybean-bulked Koji, growth of the Aspergillus is promoted by grinding steamed soybeans, forming large balls of the ground soybeans to reduce the surface area, thereby facilitating propagation of the Aspergillus mainly on the surface, and at the same time causing growth of not aerobic harmful bacteria but lactic acid bacteria and the like antagonistic thereto in the soybean ball structure.

These Kojis are used for food via a fermentation or aging step in the presence of water and sodium chloride but the Kojis per se have not been used as a food product.

Furthermore, as a recent prior art, there is a process for producing Koji which comprises, after inoculating Koji in a material for Koji-incubation, effecting the Koji-incubation, by admixing a water-containing fibrous material therein and maintaining a water content of the inoculated mixture to 25 - 45% Japanese Patents Kokai No. 2I0884/84). However, the purpose thereof is to obtain the Koji having a high level of titer by adjusting the water content of the starting mixture in a certain range with addition of a water-containing fibrous material.

## SUMMARY OF THE INVENTION:

In order to produce highly digestible, delicious foods by use of highly nutritious soybeans for the purpose of reducing anxiety about health due to overmuch intake of meats, particularly animal fat which is a serious problem in recent years, the present inventors have conducted various researches and have consequently confirmed that the combination of steamed soybeans and cellulose powder or starch powder which have not heretofore been used for Koji production at all permits a safe progress of Koji-incubation from soybeans and can give delicately tasty, non-viscous, non-off flavoured Koji having good digestibity and excellent nutrition-supplementing property which is very effective as a material for various foods, whereby this invention has been accomplished.

The Soybean Koji obtained according to this invention does not contain a large amount of sodium chloride unlike Miso, does not have any special form, viscosity and off-flavor, unlike Natto, and can be widely used for foods. Furthermore, it can produced in a large amount safely by means of an automatic Koji-incubation machine, and therefore there can be produced soybean products which can be utilized not only in Japan but all over the world, so that a contribution can be made to human prosperity.

As the soybean used in this invention, any soybeans may be used and defatted soybean may also be used depending on purposes of use.

The term "cellulose powder" used herein means a pure edible cellulose (for example, Avicel mfd. by Asahi Kasei Kogyo K.K.), which is not soluble at all in water but have a very high water-absorbing capcity and can be free from adhering undesired bacteria, and hence is the most suitable for such Koji-incubation. Furthermore, as compared with overmuch intake of animal foods, eating of fibrous foods is effective in promoting health, and the combination of the cellulose powder and soybean can impart a function as dietary fiber to the resulting product.

The amount of the cellulose powder used in this invention is preferably 2 to 6% by weight of the steamed soybeans. The powder is very light and has a strong water-absorbing capacity, and therefore even when used in such a small amount, it sufficiently absorbs water on the surface of the steamed soybeans to bring about a state in which an Aspergillus is adhering on the surfaces of the soybeans, and thus it makes Koji-incubation safe and easy. In this case, sufficient absorption of water by the soybeans is not necessary and it is preferable to conduct immersion in water for a short period of time and slight steaming so as to adjust the ratio of the weight of the steamed soybeans to that of the raw soybeans to about 1.8. When the weight of the steamed soybeans is larger than such a weight, the powder is preferably used in a larger amount in the range of 2 to 6%, while it is smaller than such a weight, the powder is preferably used in a smaller amount in this range.

There are various commercially available seed Kojis depending on purposes of use, and any Aspergillus may be used so long as it decomposes protein to a desired degree and a long conidiophore fung bacteria which hardly undergo adhesion of spore, for example, those sold at a market under the name of "Marufukumoyashi", "Shirayuki" is preferred as seed Koji.

When a starch material is used in place of the cellulose, its amount is suitably 10 to 15% or more based on the weight of the steamed soybeans. The starch may be corn starch, potato starch or the like.

The Soybean Koji thus produced is useful as a material for foods rich in flavor and nutrition-supplementing property and is applicable to substantially all of processed food products into which it can be incorporated.

For example, it can be used as it is in cheese, sausage, hamburger and fish-paste products, and it may be incorporated into potage, soybean milk, dressing and the like after grinding, autolysis etc. When made into dried powder, it can be formed into noodles, breads, biscuits and nutritive substance. Furthermore, when the same Koji production as described above is carried out by using, as a starting material, defatted soybeans prepared by previously defatting soybeans, the resulting product is suitable as an animal foods and pet foods which are easy to digest and absorb.

This invention is further explained below in more detail with reference to Examples.

Example I

(Production of Soybean Koji by use of cellulose powder)

2,000 g of soybeans were sufficiently washed with water, immersed in water for 5 hours, steamed in an autoclave at a pressure of 1.2 kg/cm² for 10 minutes, and allowed them to cool at ordinary temperature to obtain 3,650 g of steamed soybeans. The steamed soybeans were divided roughly into two portions each of which was mixed with cellulose powder as shown in the following Table. The mixtures thus obtained were used for Koji-incubation.

|  | I | II |
|---|---|---|
| Steamed soybeans | 1,800 g | 1,800 g |
| Cellulose powder | 50 g | 100 g |

Each mixture was inoculated with a small amount of a Seed Koji for rice Koji (Marufuku, Shirayuki) and loaded on a Koji tray, and Koji-incubation was carried out in an incubator for 42 hours by a conventional method. There were thus obtained Soybean Kojis having the following weights.

I 1,445 g

II 1,460 g

The soybeans Kojis have cellulose powder adhered to the surface, in which Koji hyphae propagated themselves, and the Soybean Koji were suggestive of a kind of confection.

According to observation during the Koji-incubation, the growth and heat generation of the Aspergillus were faster as compared with rice Koji and the like though this is in the nature of things, and the heat generation was also vigorous after the second day but it was relatively easy to control the temperature in a usual range.

During the Koji-incubation, no propagation of undesired bacteria was observed at all and no offensive odor was emitted. The finished Koji thus obtained emitted a sweet aroma stronger than that of rice Koji and was a very strong flavor-enhancer. It is presumed that such a flavor-enhancer is caused by decomposition of soybean protein by the Aspergillus, as shown in the following Table. Accordingly, it can also be inferred that the decomposition of soybean protein results in easy acceleration of digestion and absorption in the body, and the data suggest possibly these facts.

No.

| | Edible soybean koji | | | | Raw soybeans | |
|---|---|---|---|---|---|---|
| | Cellulose was used | | Corn powder was used | | | |
| | Soybean koji (1) | After hydrolysis | Soybean koji (2) | After hydrolysis | Raw soybeans | After hydrolysis |
| Arginine | 0.052 | 2.267 | 0.012 | 2.337 | 0.094 | 2.379% |
| o Lysine | 0.034 | 2.191 | 0.011 | 1.842 | 0.007 | 2.202 |
| Hystidine | 0.014 | 0.896 | 0.003 | 0.903 | 0.003 | 0.863 |
| Phenylalanine | 0.013 | 1.525 | t | 1.917 | 0.009 | 1.655 |
| o Tyrosine | 0.018 | 1.000 | 0.004 | 1.272 | 0.006 | 0.995 |
| o Leucine | 0.022 | 2.611 | 0.004 | 2.801 | 0.005 | 2.658 |
| o Isoleucine | 0.011 | 1.582 | 0.002 | 1.693 | 0.003 | 1.620 |
| Methionine | 0.004 | 0.359 | t | 0.327 | 0.003 | 0.135 |
| Valine | 0.021 | 1.685 | 0.007 | 1.702 | 0.016 | 1.625 |
| o Alanine | 0.051 | 1.414 | 0.016 | 1.582 | 0.016 | 1.404 |
| Glycine | 0.011 | 1.417 | 0.004 | 1.542 | 0.006 | 1.455 |
| o Proline | 0.022 | 1.729 | 0.007 | 1.837 | 0.008 | 1.924 |

0 218 967

Cont'd.

| | | | | | | |
|---|---|---|---|---|---|---|
| o Glutamic acid | 0.183 | 6.133 | 0.049 | 6.485 | 0.054 | 6.365 |
| Serine | 0.023 | 1.726 | 0.007 | 1.876 | 0.052 | 1.795 |
| o Threonine | 0.126 | 1.303 | 0.018 | 1.429 | 0.005 | 1.329 |
| Aspartic acid | 0.039 | 3.648 | 0.011 | 4.031 | 0.058 | 3.877 |
| Tryptophan | 0 | 0 | 0 | 0 | 0 | 0 |
| Cystine | 0 | t | 0 | 0.196 | 0.008 | 0.193 |

Example 2

(Production of Soybean Koji by use of corn powder)

In exactly the same manner as in Example I, 3,000 g of soybeans were washed with water, immersed in water, steamed, and allowed to cool to obtain 5,600 g of steamed soybeans. To this were mixed well 650 g of corn powder steamed at atmospheric pressure for 20 minutes and then allowed to cool, after which the resulting mixture was inoculated with a small amount of a seed Koji for rice Koji (Marufukumoyashi, Shirayuki) and heaped on a Koji tray, and Koji-incubation was carried out in an incubator by a conventional method. Thus, 4,500 g of finished Koji were obtained. It was in no way inferior to the finished Koji obtained by use of cellulose in Example I in the physical properties, aroma and flavor, had an increased sweet taste from starch, and was very tasteful.

Four portions of mixture of the finished Koji 500 g and water 350 ml were prepared by sufficient mixing in a plastic vessel. As samples for drying, two of these portions were taken out, spread in individual shallow boxes as they were, and air-dried at 30°C and 45°C, respectively, for 16 hours. As samples for digestion and drying, the other two portions were subjected to autolysis in an incubator at 45°C for 5 hours, spread in the same manner as described above, and air-dried at 30°C and 45°C, respectively, for 16 hours.

Changes of the respective weights of these samples and their respective contents of amino nitrogen were investigated to obtain the results shown in the following Table.

| Drying temperature | | 30°C | | 45°C | |
|---|---|---|---|---|---|
| | | Weight | A-N | Weight | A-N |
| Samples for drying | Beginning of drying | 810 g | 0.08% | 805 g | 0.08% |
| | After drying | 518 " | 0.40" | 341 " | 0.64" |
| Samples for digestion and drying | Beginning of digestion | 850 " | 0.08" | 850 " | 0.08" |
| | After digestion | " | 0.24" | " | 0.23" |
| | Beginning of drying | 805 " | " | 772 " | " |
| | After drying | 505 " | 0.52" | 316 " | 0.82" |

When the taste of each sample was examined, the samples treated in the manner described above apparently had a stronger and more agreeable flavor, particularly flavor-enhancer than did the untreated finished Koji. In particular, it should be noted that the samples dried as they were after addition of water also had a clearly increased good taste-enhancer.

That is to say, it was confirmed that when the method described above was employed, decomposition of protein and so on by the present Koji enzymes proceeded also during drying, so that good materials for foods which were more excellent in good taste-enhancer could easily be obtained.

This can be supported by calculation of the increased amount of amino nitrogen as shown from the above Table. For example, the weight of the sample for drying at 30°C of 810 g became 518 g after drying, namely, it decreased to 64% (518/810 × 100 = 64) of the original weight, and therefore the amount of amino nitrogen of 0.08 g in 100 g of the soybean Koji incorporated with water before drying was increased to 64 g × 0.4/100 = 0.256 g by air-drying at 30°C.

The increase of the amount of amino nitrogen per 100 g of each portion of water-containing mixture was calculated in the individual steps to obtain the results shown in the following Table.

| Drying temperature | | | |
|---|---|---|---|
| | | (Increase of A-N) | |
| **Samples for drying** | Beginning of drying | 0.08 | 0.08 |
| | After drying | 0.256 | 0.271 |
| **Samples for digestion and drying** | Beginning of digestion | 0.08 | 0.08 |
| | After digestion | 0.24 | 0.23 |
| | Beginning of drying | 0.24 | 0.23 |
| | After drying | 0.326 | 0.336 |

palate.

## Example 3

(Application to cheese)

Cheese was produced by using as a material the soybean Koji obtained in Example 2 by use of corn powder.

In a beaker were placed 270 g of the aforesaid soybean Koji and 900 g of commercially available processed cheese, and heated and mixed. The resulting mixture was placed in a steam oven, steamed at atmospheric pressure for l5 minutes, placed in the same container as those for commercially available cheese, and then cooled to obtain 4.5 containers of cheese containing soybean Koji.

Soybean Koji granules of 20 on the average were present in a 3 cm × 5.5 cm section of the cheese obtained; a section formed by cutting this cheese with a knife was smooth; the yellowish-white color of cheese harmonized agreeably with the light-brown color (circular form) of the soybean Koji in the section; and thus the cheese obtained had a favorable shape as a food.

As to the taste, the cheese obtained emitted a flavor characteristic of cheese more mildly than cheese containing no soybean Koji, had such mouth-feel that the softness of cheese harmonized with the moderate hardness of the soybean Koji, and was judged to be one which did not cloy the

## Example 4

(Application to pork sausage)

Pork sausage was produced by using as a material the soybean Koji obtained in Example I.

With 3.500 g of pork sausage emulsion (which had been seasoned and flavored) in the course of preparation were sufficiently mixed 500 g of the aforesaid soybean Koji as it was. The resulting mixed emulsion was placed in an air pressure filling machine and packed in casings under pressure, and the casings were tied up to obtain l2 - (exclussive of the residue in the machine) raw sausage of a content of 230 g having a diameter of 4.2 cm. The raw sausages were smoked and boiled in hot water by a conventional method to produce sausages containing soybean Koji.

When sections of the products were examined (20 cases), the number of Koji granules present in the section was 6.0 on the average, the standard deviation was 2.2l, and the scatter of distribution was large. This is probably because the amount of the soybean Koji mixed was small as compared with that of the sausage. In the sections, Koji granules were sufficiently adhered to the sausage, and the sections were even and homogeneous. The sausages had a milder taste than did sausages containing no soybean Koji, and did not cloy the palate, and its moderate mouth-feel was agreeable.

Since the soybean Koji according to this invention serves as a tasteful material which is easy to digest and absorb and excellent in nutrition-supplementing property, it is applicable also to various processed foods other than the foods shown in the above Examples. Foods to which said soybean Koji is applicable include substantially all Japanese processed foods, for example, dairy and meat products such as not only cheese but also ham, hamburger and shao-mai; fish products such as boiled fish paste, fish sausage and salted fish guts, dainties, breads, confectionary, snacks, Tofu, fried bean curd, etc. Said soybean Koji is applicable also to various foods of foreign countries and will bring about a great effect. Furthermore, it is considered to be very effective as a nutritive substance.

Now, most of soybeans in the world are subjected to oil expression to give soybean oil and defatted soybeans, and most of the defatted soybeans are consumed as animal feed.

It is anticipated that foods in the world run short with an increase of the population. Therefore, also from the worldwide viewpoint, effective utilization of soybean is useful for preventing such uneconomical use of precious soybean protein that it is used for food after being converted as feed into animal protein and overmuch intake of animal foods, and for acquiring healthy eating habits.

## Claims

1. A non-viscous, edible soybean Koji having no off-flavor of which the surface is covered with Aspergillus hyphae, and cellulose and/or starch are present in the surface of the soybean Koji.

2. An edible soybean Koji according to Claim I, wherein calcium carbonate is present in the surface of the soybean Koji.

3. An edible soybean Koji according to any one of Claims I or 2, which is in powder form, granular form or flake form.

4. An edible soybean Koji according to Claim I, wherein the soybean is defatted soybean.

5. A process for producing an edible soybean Koji having no off-flavor which comprises mixing and coating steamed soybeans with a suitable amount of powdered cellulose or powdered starch to adjust the water content of surface of the steamed soybeans so as to be suitable for Koji-incubation, and inoculating seed Koji on the surface of the treated soybeans.

6. A process according to Claim 5, wherein the cellulose is Avicel.

7. A process according to Claim 5, wherein the starch is corn starch or potato starch.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,P | PATENT ABSTRACTS OF JAPAN, vol. 10, no. 36 (C-328)[2093], 13th February 1986; & JP - A - 60 188 042 (TATSUYA IWASAKI) 25-09-1985 | 1,4 | A 23 L 1/20<br>A 23 L 1/105<br>C 12 N 1/14 |
| | --- | | |
| Y | US-A-4 028 470 (K. HAYASHI et al.)<br>* claims 1, 4 * | 1,4 | |
| | --- | | |
| Y | EP-A-0 011 998 (BEATRICE FOODS CO.)<br>* claim 1 * | 1 | |
| | --- | | |
| Y,P | PATENT ABSTRACTS OF JAPAN, vol. 10, no. 123 (C-344)[2180], 8th May 1986; & JP - A - 60 248 173 (GOMACHIDA SHIYUZOU K.K.) 07-12-1985 | 1 | **TECHNICAL FIELDS SEARCHED (Int. Cl.4)** |
| | --- | | A 23 L 1/00<br>C 12 N 1/00 |
| D,A | PATENT ABSTRACTS OF JAPAN, vol. 9, no. 78 (C-274)[1801], 6th April 1985; & JP - A - 59 210 884 (NAGANOKEN MISO KOGYO KIYOUDOUKUMIAI) 29-11-1984 | | |
| | ----- | | |

The present search report has been drawn up for all claims

| Place of search | Date of completion of the search | Examiner |
|---|---|---|
| BERLIN | 05-12-1986 | SCHULTZE |